# EUROPEAN PATENT APPLICATION

(11) **EP 4 781 824 A1**
(43) Date of publication of application: **29.07.2026**
(21) Application number: 24866612.5
(22) Date of filing: 17.09.2024
(51) Int. Cl.: A01K 45/00

(54) **IMPROVEMENT APPLIED TO THE PERFORATOR OF AN INJECTION DEVICE FOR INJECTING SUBSTANCES OF INTEREST INTO EGGS, SPECIFICALLY TO THE STRUCTURAL ARRANGEMENT FOR SANITISING THE ENTIRE INTERNAL AND EXTERNAL AREAS OF THE PERFORATION CANNULA, AND ASSOCIATED OPERATIONAL LOGIC FOR SANITISATION**

(30) Priority: 19.09.2023 BR 102023019093
(71) Applicant: Ion - In-Ovo Nutrition Industria e Comercio De Nutricao Animal e Equipamentos LTDA, 13075-460 Campinas (BR)
(72) Inventor: TELLES ASSUNÇÃO, Hernani, 13451-053 Santa Barbara D' Oeste (BR); SCHLICK, Artur, 95905-030 Lajeado (BR)
(74) Representative: dompatent
(86) International application number: PCT/BR2024/050422
(87) International publication number: WO 2025/059742

(57) **Abstract**

**"IMPROVEMENT APPLIED TO THE PUNCH OF AN IN OVO INJECTOR DEVICE FOR SUBSTANCES OF INTEREST, NOTABLY IN A CONSTRUCTIVE ARRANGEMENT FOR SANITIZATION OF THE ENTIRE INTERNAL AND EXTERNAL AREAS OF THE PIERCING CANNULA AND ITS OPERATIONAL SANITIZATION LOGIC"** represented by an inventive solution in the poultry sector, notably for the stage of in ovo fertile "inoculation of substances", in which a specific system is widely used for this purpose, where for its in ovo substance inoculation module (M3), in its in ovo injector device, specifically its perforator component part must have guaranteed sanitization of both the entire internal area and the external area of the piercing cannula, where for this second one any dry area or non-sanitized area (NSA) must be eliminated, and for this demand the improved perforator component part (IA) was conceived, in which an annular channel (500) was designed, which surrounds the entire external part of the upper fitting end of the body (401) of the piercing cannula (40), which by gravity flows over the entire external surface of the body (401) until it reaches the beveled tip (402) of the piercing cannula (40), thus ensuring its complete sanitization.

## Description

### TERMINOLOGY

For the purpose of a better understanding of the matter revealed and claimed in this patent application, the meaning of some terms and acronyms richly cited in the body of the specification is presented, namely:
- Poultry farming: raising poultry for food production, especially meat and eggs.
- Poultry species: among the species raised in poultry farming, chicken deserves to be highlighted, and, to a much lesser extent, birds such as turkeys, ducks, geese, quails and ostriches are also raised.
- Fertile egg: also known as galled egg, is understood as an egg already fertilized by the rooster, which will generate an embryo that will develop until its final formation as a bird.
- Embryo: for the purposes of this invention it is an immature organism, in the early stages of development, before leaving the interior of the fertile egg.
- Amniotic fluid: or amniotic liquid, is the fluid that surrounds the embryo, filling the amniotic sac, which acts as protection from mechanical and thermal shocks and also as nutritional food, on which the embryo feeds during its development inside the egg itself.
- Control factors: in order to ensure the production with quality and productivity, of poultry, notably broiler chickens, specific vaccination (disease control) and nutritional procedures (obtaining birds with weight, meat quality, etc.) are provided for the bird embryo.
- Intra-egg interference: also known as "in ovo", it corresponds to any interference of an external nature applied inside an egg, commonly performed for vaccination and/or nutrition of fertile eggs of avian species, especially in broilers.
- In ovo feeding: it is performed in the pre-hatching phase of the egg where the shell of the embryonated egg is punctually perforated and then the nutrient is inoculated directly into the amniotic fluid by means of a syringe and from the 15th day of incubation the embryo begins to ingest the amniotic fluid with incorporated nutritional supplement (Klasing, 1998).
- Substance of interest: must be understood as the universe of substances such as vaccines, nutrients, among others used in the processing of egg culture, notably fertile eggs.
- Inoculation module of fertile in ovo substances: responsible for the inoculation of vaccines and/or nutrients in all fertile eggs pre-classified in the candling module.
- In ovo injection device: main device that integrates the "Inoculation module" of substances of in ovo interest, responsible for the actual inoculation of vaccines and/or nutrients in all fertile eggs pre-classified in the candling module.
- Punch: is one of the component parts that make up the in ovo injector device, responsible for providing the perforation of the eggshell to provide subsequent access to the injection needle of that same device.
- Sanitization: must be understood as the procedure for sterilizing channels for conducting substances of interest in devices of the "in ovo" type injectors of substances, where for the purpose of this invention attention will be given to the sanitization applied to the perforator component part of this device.
- IPC: An acronym in English for International Patent Classification has been in force since 1968. The Strasbourg Agreement (1971) established a common classification for patents of invention.
- CPC: English acronym for Cooperative Patent Classification for classifying patent applications.
- Man of the trade: according to the understanding of the treatisers CHAVANNE, Albert & BURST, Jean-Jacques, in their work Droit de Lá Propriété Industrielle. Paris: Dalloz, 1993, p.53-55, in a remissive way, is the person skilled in the art who has the normal and average knowledge of the technique that will be the object of analysis of the present patent of invention, who is the technician knowledgeable, and specifier of equipment applied in the practice of poultry farming.

The list of terms, technologies and technical concepts presented in this preliminary topic must be considered for the correct understanding of the patent of invention, granting the mandatory descriptive sufficiency to the body of this specification, as well as being used as a reference for studies in comparative analyses, whether with hypothetical solutions of the state of the art relevant to the invention and not mentioned in this cartouche, as well as for products of the same nature and same international patent classification, IPC and/or Cooperative Patent Classification - CPC disclosed and/or marketed by third parties who are not the holder(s) of this patent of invention.

### BRIEF DESCRIPTION OF THE FIGURES

To complement the description in order to obtain a better understanding of the characteristics of the present patent of invention and in accordance with a preferred embodiment thereof, the description is accompanied, attached, by a set of block diagrams, drawings representing a generic embodiment of a conventional sanitization system applied to in ovo injectors and drawings representing a preferred embodiment for the improved perforating component part and its sanitization logic applied to all sorts of constructive configurations of in ovo injectors, where:
Figure .1a is a representation in the form of a block diagram, representative of the general architecture of a system for inoculating substances of in ovo interest, evidencing the operational module of interest, that is, the in ovo substance inoculation module, when in a sanitization set-up, via the sanitization module.
Figure .1b is an enlarged detailed view of a fertile egg during the procedure of inoculation of an in ovo substance, showing the punch + needle assembly, the first being the part now improved.
Figures .2a and 2b are an illustrative representation of the "state of the art" of an in ovo injection device to which the conventional in ovo injection device is applied, which are a partial representation of figures .7 and .8 extracted from patent document PI 9207205-4 B1 filed on 09/11/1992 entitled "DEVICE FOR EGG INJECTION", where the conventional constructiveness of the component parts, punch and needle, are evidenced.
Figure .3 is an illustrative representation in frontal and complete view of a generic model of in ovo injector device of substances of interest, showing the sector where the piercing component part is positioned.
Figure .4a is an illustrative representation in elevation view of the perforator component part of conventional construction concept, evidencing its constructive elements.
Figure .4b is a representation in front illustrative view of the perforator component part that drills a conventional construction concept, evidence of its constructive elements.
Figure .4c is an illustrative representation in longitudinal section "XX" of the perforator component part of conventional construction concept, evidencing its constructive elements.
Figure .4d is a representation in an inferior illustrative view of the perforator component part of a conventional construction concept, evidencing its constructive elements.
Figure .4e is a representation in an exploded illustrative view and in longitudinal section "XX" of the perforator component part of conventional constructive concept, evidencing the constructive elements thereof.
Figures .5a and .5b are representations in illustrative view in longitudinal section "XX" of the punch component part of a conventional constructive concept, evidencing the flow of sanitization fluid to which it is subjected, highlighting its negative aspects wherein a sanitization deficiency sector is identified, notably in its external area, which at the end of the sanitization submission opens an opportunity for contamination of the egg during the procedure of inoculation of substance of in ovo interest;
Figure .6a is an illustrative representation in elevation view of an embodiment of the punch with an improved constructive concept, evidencing the constructive elements thereof.
Figure .6b is a representation in front illustrative view of an embodiment of the punch with an improved constructive concept, evidencing the constructive elements thereof.
Figure .6c is a representation in illustrative view in longitudinal section "XX" of an embodiment of the punch with an improved constructive concept, evidencing the constructive elements thereof.
Figure .6d is a representation in an inferior illustrative view of an embodiment of the punch with an improved constructive concept, evidencing the constructive elements thereof.
Figure .6e is a representation in exploded illustrative view and in longitudinal section "XX" of an embodiment of the punch with an improved constructive concept, evidencing the constructive elements thereof.
Figure .7a is a representation in illustrative view in longitudinal section "XX" of an embodiment of the punch with an improved constructive concept, evidencing the flow of sanitization fluid to which it is subjected, highlighting its positive aspects where all sectors of the piercing cannula are sanitized throughout its area, internal and external, eliminating any opportunity for contamination of the egg during the procedure of inoculation of in ovo substance of interest.
Figure .7b is an illustrative representation in longitudinal section "XX" of an embodiment of the improved punch, evidencing its constructive concept.
Figure .8a is an illustrative representation of an elevation view of a second embodiment of the punch with improved constructive concept, evidencing its constructive elements;
Figure .8b is a front illustrative representation of a second embodiment of the punch with improved constructive concept, evidencing its constructive elements;
Figure .8c is an illustrative representation view in longitudinal section "XX" of a second embodiment of the punch with improved constructive concept, evidencing its constructive elements;
Figure .8d is an illustrative representation in lower view of a second embodiment of the punch with improved constructive concept, evidencing its constructive elements;
Figure .8e is an illustrative representation in exploded view and in longitudinal section "XX" of a second embodiment of the punch with improved constructive concept, evidencing its constructive elements;
Figure .9a is an illustrative representation in longitudinal section "XX" of a second embodiment of the punch with improved constructive concept, evidencing the sanitization flow to which it is submitted, highlighting the positive aspects thereof where all sections of the drilling cannula are sanitized throughout their area, internal and external, eliminating any opportunity of egg contamination when undergoing the in ovo inoculation of substances of interest;
Figure .9b is an illustrative representation view in longitudinal section "XX" of a second embodiment of the improved punch, evidencing its constructive concept;
Figure .10a is an illustrative representation of an elevation view of a third embodiment applied to the upper block element of the improved punch, evidencing the plurality of peripheral channels for the flow of sanitizing liquid.
Figure .10b is an illustrative representation of the longitudinal section view "XX" of a third embodiment applied to the upper block element of the improved punch, evidencing the plurality of peripheral channels for the flow of sanitizing liquid.
Figure .10c is an illustrative representation of the bottom view of a third embodiment applied to the upper block element of the improved punch, evidencing the plurality of peripheral channels for the flow of sanitizing liquid.
Figure .11a is an illustrative representation of the elevation view of a third embodiment applied to the lower block element of the improved punch, evidencing the plurality of peripheral channels for the flow of sanitizing liquid.
Figure .11b is an illustrative representation of the longitudinal section view "XX" of a third embodiment applied to the lower block element of the improved punch, evidencing the plurality of peripheral channels and lower channel for the flow of sanitizing liquid to the external surface of the piercing cannula; and
Figure .11c is an illustrative representation of the bottom view of a third embodiment applied to the lower block element of the improved punch, evidencing the lower flow channel of sanitizing liquid to the outer surface of the drill cannula.

### DEMAND FOR INVENTION

### A. Introduction

The injection of substances such as vaccines into live eggs (with embryos) is widely adopted by the poultry sector, as it confers beneficial effects on the health of the bird that will hatch from inside the egg in which it is gestated.

In this wake, this poultry sector realized that the in ovo injection of substances such as vaccines and/or nutrients provides greater ease, control, and final quality for the beneficial effects than the practice of applying these substances to the bird already hatched from inside the egg.

This scenario occurs because it has been proven to be more efficient to keep eggs with embryos immobile and handle them in a controlled way, which is much more complex to achieve for a condition of birds that have already hatched, as they exhibit frenetic movement.

### B. Concept of inoculation of in ovo substances

In view of the proven convenience of in ovo inoculation of poultry with substances of interest, such as vaccines and/or nutrients, the poultry sector has benefited from the use of solutions for this purpose, with the most basic concept, see figure .1b, being described as the technique in which forced inoculation is performed on the eggshell (Ca) of the egg (Ov), using some pressurization tool, for example a punch (Et1) or even physically forcing an opening in this shell (Ca).

Next, the in ovo inoculation of the substance of interest itself is carried out using any needle arrangement (Et2), this being the most basic technique for this procedure, thus pouring the substance of interest, nutrient, for example, into the amniotic fluid (Li) and vaccine, for example, into the embryo (Em).

In this context, men who are specialists in the practice of handling fertile eggs (Ov) know that as soon as the punch (Et1) and needle (Et2) return their ends from the inside of this egg (Ov), they bring with them residual material formed both by the substance of interest, such as a vaccine or nutrient, and by organic material, such as amniotic fluid and even blood resulting from the intravenous interference of the needle (Et2) as well as the epidermis of the embryo (Em).

In view of this scenario, the practice of a sanitization procedure of the punch (Et1) and needle (Et2) elements is mandatory, with the main objective of providing their sterilization and consequent elimination of any risk of contamination of subsequent eggs (Ov) that will receive the next doses of substances of interest.

It is exactly in this context that the demand for the present invention resides, which preferentially aims to render the in ovo injection device at the limit of sanitization effectiveness, especially the perforator component part (Et1).

### C. Specific demand of the invention

For the present invention, having defined the perforator component part of the injector device of substance of interest, the applicant identified the list of pressing needs:
- ensure that this "facilitates", or even makes feasible, the sanitization of the entire internal area and the entire external area of the piercing cannula element belonging to the punch;
- Provide greater drainage capacity for the sanitizing solution;
- Eliminate build-up and sanitizing solution inside the injector device;
- eliminate any possibility of the sanitizing solution contaminating the egg in the next injection cycle;
- mitigate the accumulation of sanitizing solution in the space between the internal area of the piercing cannula and the external area of the needle positioned inside; and
- mitigate friction of the injector needle with the piercing cannula.

### FIELD OF APPLICATION

The present patent of invention with the title above and object of description and claim in this cartouche deals with an inventive solution that finds outstanding benefit in the poultry sector, intended for the reproduction of birds, and more specifically in the area of creation and development of embryos for the creation of poultry species.

For better positioning of the field of application, or technical field, those skilled in the industrial activity in the area of fertile egg production (Ov), as in the case illustrated in figure .1a, know that this activity has embarked on a degree of complexity that involves the macro stages:
- Identification of fertile eggs;
- Inoculation of substances in fertile eggs; and
- Incubation of fertile eggs.

For the purposes of this patent, the invention finds specific utility in the stage of "inoculation of substances" in fertile eggs (vaccines, nutrients and even nutritional vaccine complexes.

In turn, the "inoculation of substances" stage has defined a complex system as well, formed by the functional modules, see figure .1a:
- Operational control module (M1);
- Candling module (M2);
- In ovo substance inoculation module (M3); and
- Treated fertile egg transfer module (M4), where after being vaccinated the eggs are transferred from the tray to the hatcher basket and then taken to the hatcher module itself.

In turn, the in ovo substance inoculation module (M3) has defined the devices:
- Support platform device (d31);
- Substance of interest injector device (d32);
- Injector stabilizing device (d33); and
- Sanitization device (d34).

For the purpose of this invention, improvements were devised specifically to the injector of the substance of interest (d32), see figure .1a, aiming to make the sanitization sweep of the piercing cannula of the piercing component part (Et1), in the entirety of its external area and its internal area.

### INVENTION REQUIREMENTS

In line with the demand for the invention, the applicant conceived the "IMPROVEMENT APPLIED TO PUNCH OF AN IN OVO INJECTOR DEVICE OF SUBSTANCES OF INTEREST, NOTABLY IN CONSTRUCTIVE ARRANGEMENT FOR SANITIZATION OF THE ENTIRE INTERNAL AND EXTERNAL AREAS OF THE PIERCING CANNULA AND ITS OPERATIONAL SANITIZATION LOGIC" provided with novelty associated with inventive activity, as it does not arise in an obvious or evident way from other techniques anticipated by the state of the art, notably for the perforator component part, conferring advantages from the technical, industrial, and commercial points of view.

In addition, the "invention" is provided with industrial applicability, being economically viable and, therefore, meeting the rigor of the patentability requirements, notably as a patent of invention.

### FUNDAMENTALS OF TECHNIQUE

In order to provide veracity, and consolidate the context explained in the topics of the introductory table, an explanation will be presented about the state of the art for in ovo injector devices, where after critical analysis of these, once evaluated by persons skilled in the art, their limiting aspects were identified, thus consolidating the identification of the previously mentioned demand.

### A. On the conventional technique

Experts in the area of fertile egg (Ov) management, that is, in the condition illustrated in figure .1b, know that the concept of perforation and subsequent injection of in ovo substances are widely known in the state of the art, and research in a patent database consolidates this understanding, where it is pertinent to list:
**D1:** Brazilian Patent PI 9207205-4 B1, entitled "DEVICE FOR INJECTION INTO EGG" published on 04/18/2000;
**D2:** U.S. patent US5438954A entitled "METHOD AND APPARATUS FOR INITIAL EMBRYONIC INJECTION IN OVO";
**D3:** European patent WO1999034667A1 entitled "AUTOMATED IN OVO INJECTION APPARATUS";
**D4:** U.S. patent US6286455B1 for the title "AUTOMATED IN OVO INJECTION APPARATUS";
**D5:** U.S. patent US6668753B2 entitled "METHODS AND APPARATUS FOR DISPENSING FLUID FOR EGG INJECTION DEVICES";
**D6:** U.S. patent US20070215050A1 entitled "SYSTEMS AND METHODS FOR SANITIZING EGG PROCESSING EQUIPMENT";
**D7:** U.S. patent US20060075973A1 entitled "METHODS AND APPARATUS FOR INJECTION AND SAMPLING OF MATERIAL THROUGH AVIAN EGG MEMBRANES";
**D8:** U.S. patent US20070044721A1 title "IN OVO INJECTION ADMINISTRATION DEVICE WITH INTEGRATED PUMP AND INJECTION NEEDLE";
**D9:** U.S. patent WO2009002397A1 entitled "METHODS AND APPARATUS FOR DELIVERY OF VARIOUS SUBSTANCES IN OVO"; and
**D10:** U.S. patent US20160007575A1 entitled "SANITIZING SYSTEM FOR AN EGG PROCESSING APPARATUS AND ASSOCIATED METHOD."

For the purpose of a better understanding of the problem to be solved by the present invention, patent document D1 Brazilian Patent PI 9207205-4 B1 is chosen, which is defined as a paradigm for the studies, notably to better understand the component part of interest, which is the punch (Eq1). Figures .2a and .2b are partial representations of figures .7 and .8 of the aforementioned prior document, where an injection needle (32) is described in detail; a punch (31) surrounding the needle (32) where an annular space is defined between the two through which a sterilizing fluid (66) passes, wherein the punch (31) has two defined fluid outlet openings (70), adjacent to and partially above the lower parts of said punch (31), where these openings (70) allow the sterilizing fluid to be displaced to the external surface thereof, sanitizing both the punch (31) and the needle (32).

As can be seen, it is a constructive configuration that dates from the year 2000, being even older when we consider that this Brazilian patent document is an extension of U.S. patent US5136979, published in 1992, that is, it dates back 3 decades.

However, experts in the field verify that the concept of the perforator component part has not changed at all. However, to facilitate the identification of the problem to be solved, a contemporary configuration is presented as an example, for a conventional in ovo injection device (Di), see figure .3, formed by the component parts:
- Eight-way cable (a), applied to stepper motor;
- connector (b) for the entry of the substance of interest to be injected into fertile eggs (Ov);
- connector (C3) for coupling a hose (C1) for the supply of sanitizing substance;
- upper body (D) of the in ovo injector;
- intermediate body (E) of the in ovo injector;
- Lower cup (F) of the in ovo injector; and
- Needle (g).

In turn, the punching component piece (i) is mounted inside the lower body (f), whereby the constructive concept thereof is described from figures .3a to .3e, formed by the construction sets:
- Flexible cup (1), made of polymeric material, formed by a flexible cup (11);
- upper block (2), made of solid, metallic or polymeric material, formed by a body (21) whose upper part is defined by a funnel (22), whose lower part has a defined opening (23) that defines the channel (24) that passes through to the extreme lower part of the body (21);
- Lower block (3), made of solid material, metallic or polymeric, formed by a body (31) whose upper part is defined by an orthogonal opening (32), passing through to the extreme lower part of the body (31); and
- Piercing cannula (4), made of metallic material, preferably in surgical steel, formed by a tubular body (41), with a chamfered tip (42) and sharp, wherein in its tubular body a through hole (43) is defined in the lower median portion of the body (41) and in the upper median portion a pair of perpendicular holes (44).

The conventional punch set (I) is obtained from the assembly between the upper block (2) and the lower block (3), with alignment between the channel (24) and the orthogonal opening (32), to which the upper end of the body (41) of the piercing cannula (4) is mounted, whereby the upper block (2) and lower block (3) set is covered by the flexible cup (1).

### B. Punch sanitization logic (I)

As illustrated in figures .5a and .5b, when a flow of sanitizer (Fx) is applied from the opening (23), following the inner part of the body (41) of the piercing cannula (4) to the beveled tip (42), and draining to the outside of this body (41) first when it meets and exits through the perpendicular holes (44) and next when it meets and exits through the through hole (43).

### C. Critical analysis - problem identification

As illustrated in figures .5a and .5b, although sanitization (SA) is performed throughout the entire internal area of the body (41) of the piercing cannula (4), the same does not occur for its external area, where in its upper region, immediately below its fitting with the lower block (3), see white arrow, which is defined as dry area (ANS), or non-sanitized area, because due to the constructive concept of the punch (I) the Flow (Fx) of sanitizer does not reach this solution area.

### PROPOSAL OF THE INVENTION

### A. Objective

The applicant, upon identifying the restrictive aspect previously listed, defined as the objective of this invention the search for a solution that allows it to be solved and, as a consequence, to render feasible the list of needs identified in the topic of Demand of the Invention.

### DISTINCTIVE FEATURE

The following detailed description should be read and interpreted with reference to the drawings presented, representing a preferred embodiment for the improvement developed applied to the punching component part (IA), not being intended to limit the scope of the invention, which is limited only to what is set forth in the set of claims.

### A. Constructive improvement concept

As illustrated in figures .6a to .6e, the component part of the improved punch (IA) in a first embodiment is formed by the construction sets:
- Flexible cup (1), made of polymeric material, formed by a flexible cup (11);
- upper block (20), made of solid, metallic or polymeric material, formed by a body (201) whose upper part is defined by a funnel (202), whose lower part has a defined central opening (203) that defines the channel (204) that passes through to the extreme lower part of the body (201), where adjacent to this opening (203) and respective channel (204) is defined at least one opening (205) of channel (206) that also pass through to the lower part of the body (201);
- Lower block (30), made of solid material, metallic or polymeric, formed by a body (301) whose upper part has defined channels (304) and (305), positioned in alignment with the channels (204) and (206) of the upper block (20), whereby these channels extend to the chamber (306), which in turn has a lower channel (302) defined at the bottom thereof;
- Piercing cannula (40), made of metallic material, preferably in surgical steel, formed by a tubular body (401), with a beveled tip (402) and sharp.

The improved punch set (IA) is obtained from the assembly between the upper block (20) and the lower block (30) with alignment between the channels (204) and (206) with the channels (304) and (305) respectively, where the uppermost end of the body (401) of the drill cannula (40) is mounted, which passes through the channel (302) and chamber (306) of the lower block (30) until its coupling with the channel (204) of the upper block (20) with a fitting stroke up to the upper end of this channel (204), where the upper block (20) and lower block (30) set is covered by the flexible cup (1).

Finally, once the improved punch (IA) is mounted on the bottom of the lower block (30), an annular channel (500) is defined, which surrounds the entire outer part of the upper fitting end of the body (401) of the piercing cannula (40).

### B. Improved punch sanitization logic (AI)

As illustrated in figure .7a, the sanitization of the body (401) of the piercing cannula (40) is carried out by supplying a sanitizer flow (Fx) that feeds the funnel (202) of the upper block (20), and then two flow paths are defined:
- Sanitization of the internal part of the piercing cannula (40), where the internal flow (Fxi) of sanitizer penetrates the internal part of the body (401) and describes a linear flow in which it sweeps its entire internal area until it exits through the beveled tip (402);
- Sanitization of the external part of the piercing cannula (40), where the external flow (Fxe) of sanitizer penetrates the channels (206) of the upper block (20), and continues until it meets and travels through the channels (305) of the lower block (30), leading to the chamber (306) and then drains through the annular channel (500), which surrounds the entire external part of the upper fitting end of the body (401) of the piercing cannula (40), which by gravity drains along the entire external surface of the body (401) until it meets the beveled tip (402) of the piercing cannula (40).

The choice of the preferred embodiment of the invention object of claim in this cartouche, described in this detail topic, is provided only as an example. Alterations, modifications and variations can be made for any other embodiments of the perfected punch (AI), changes that can be idealized by those skilled in the art without, however, diverging from the objective revealed in the application of the present patent, which is exclusively defined by the attached claims.

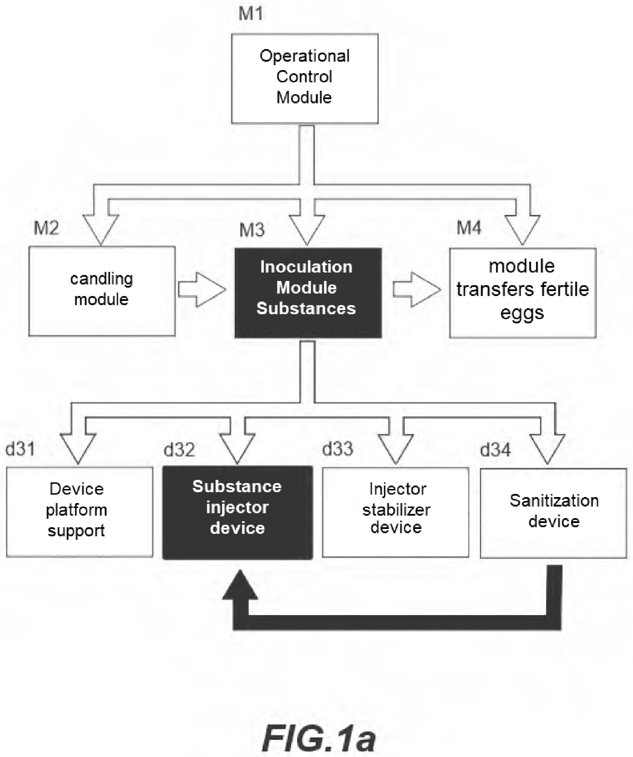

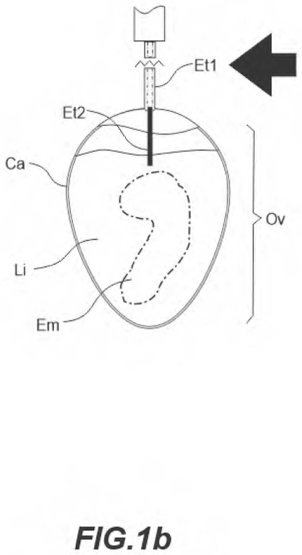

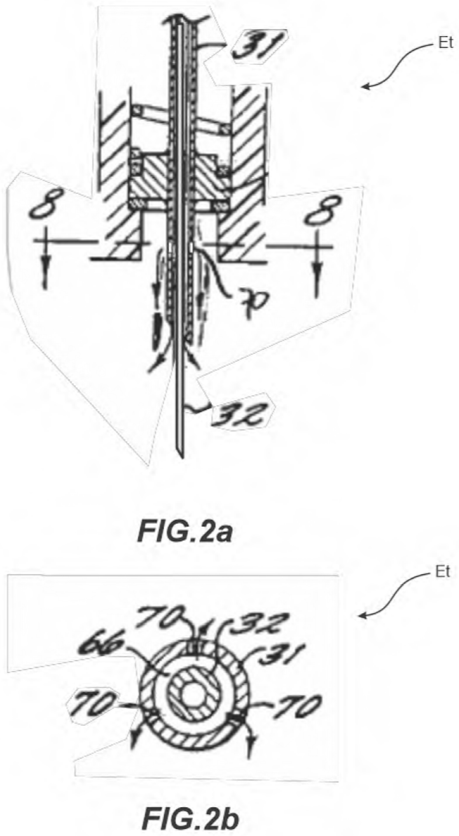

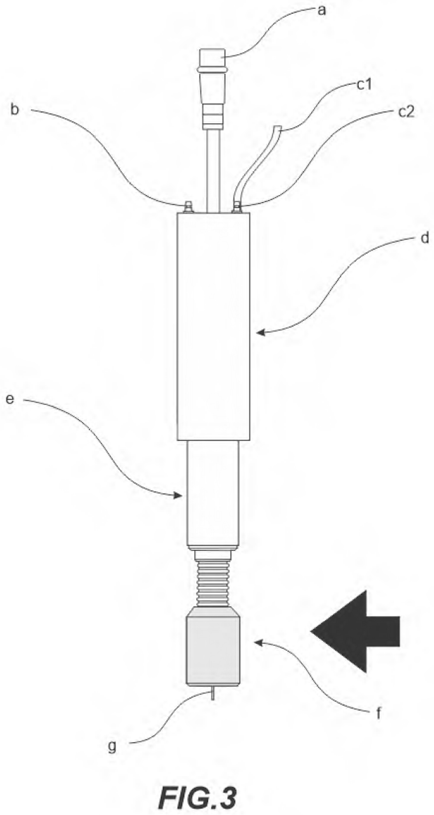

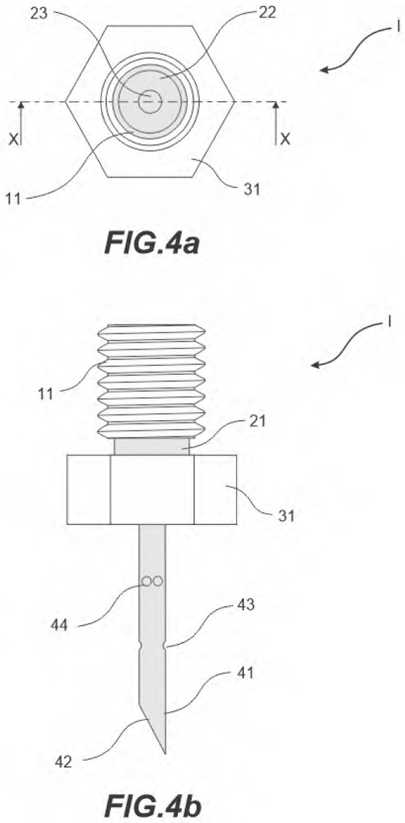

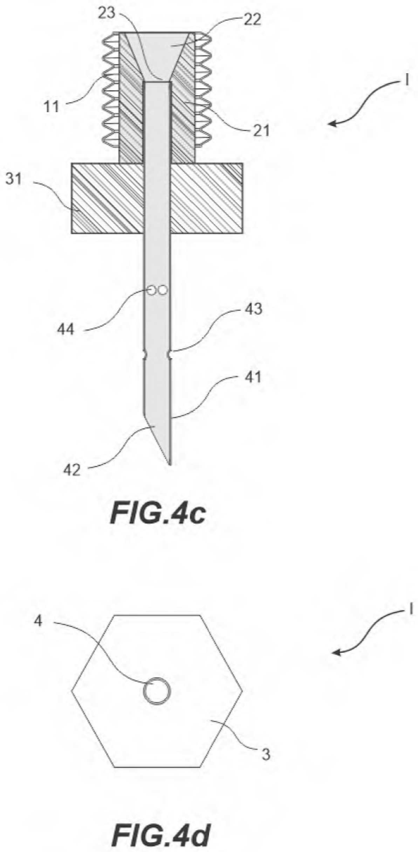

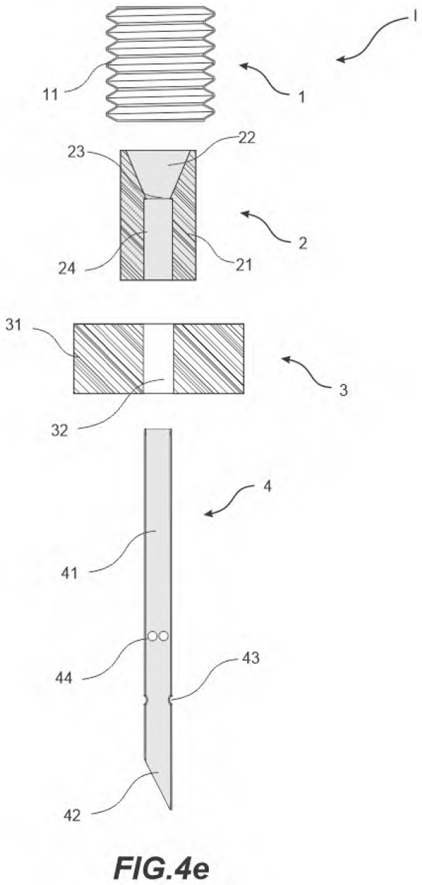

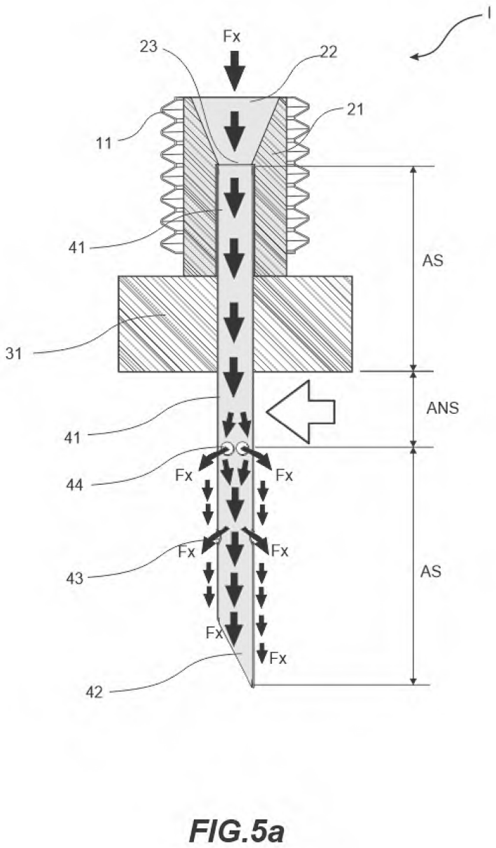

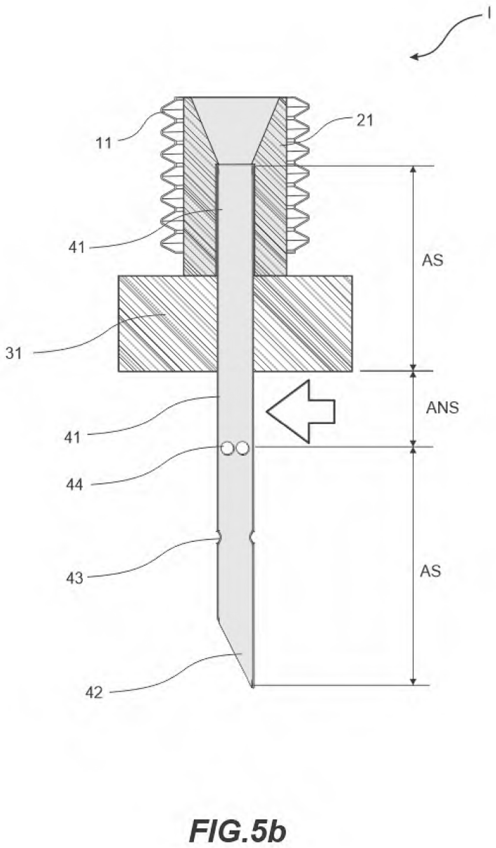

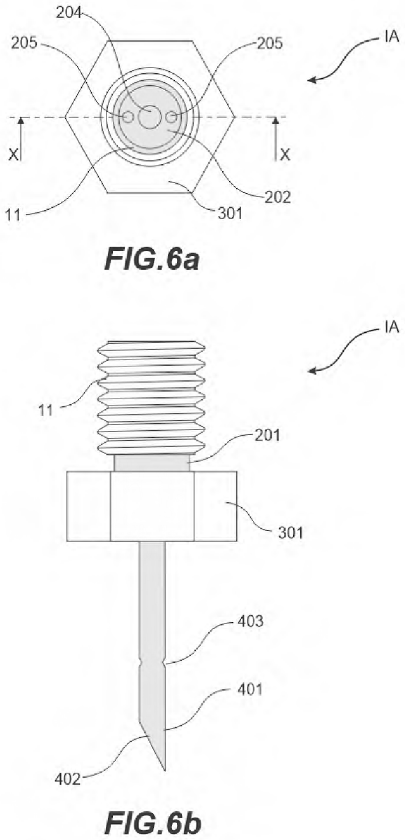

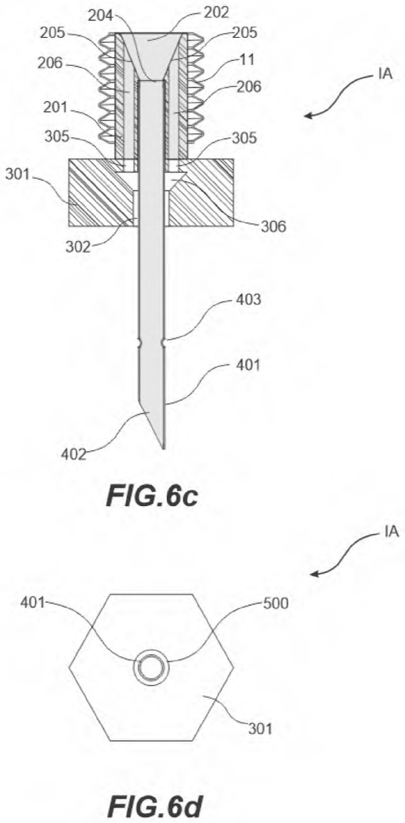

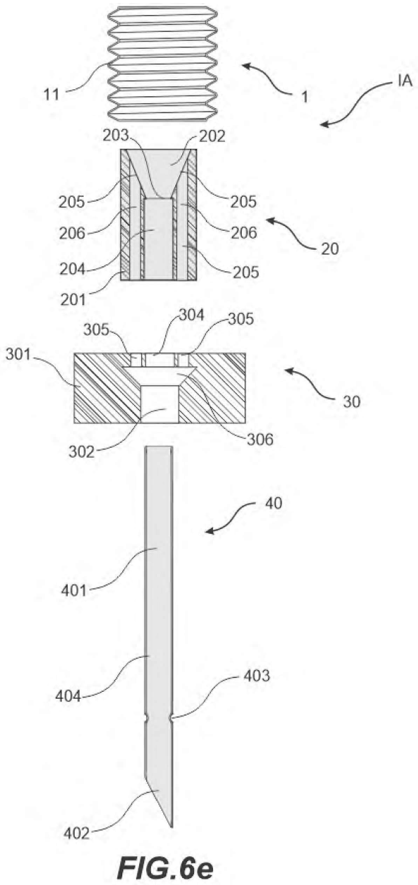

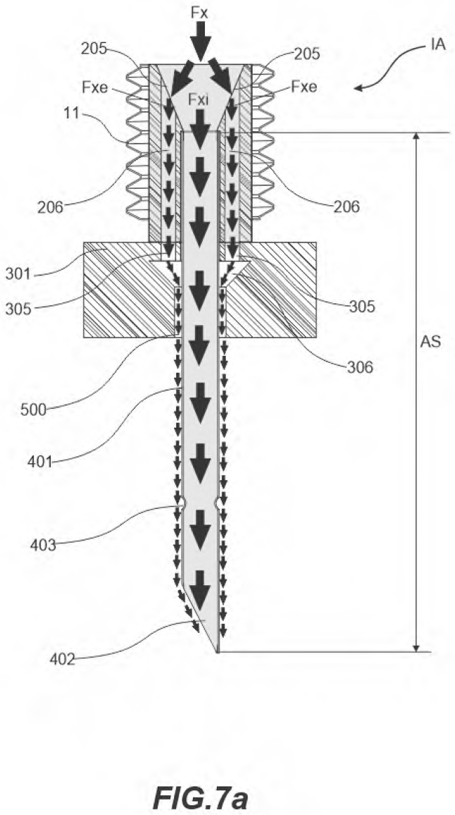

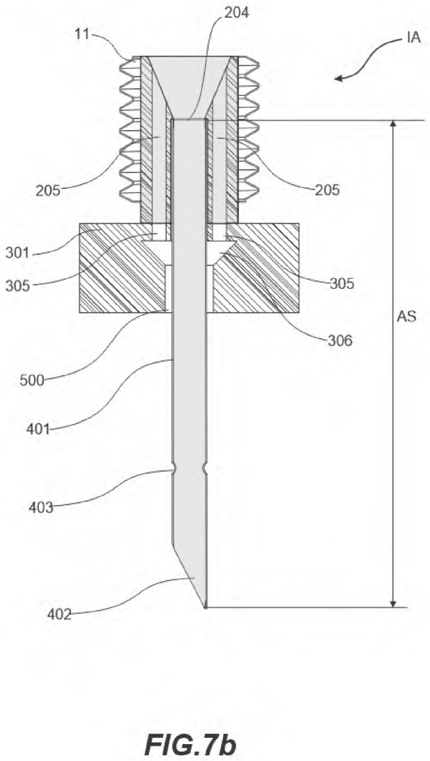

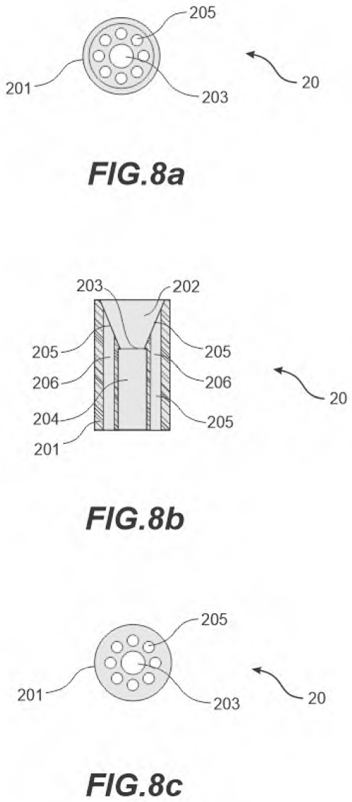

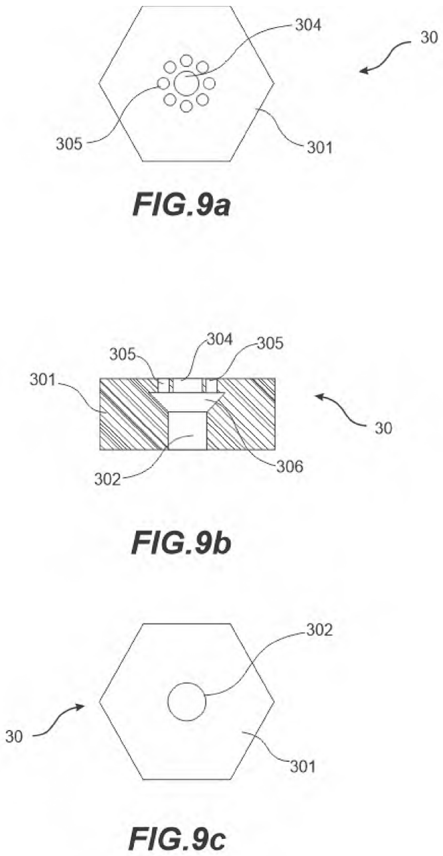

In this vein, in a second embodiment of the improved punch (IA) that can be applied considering the introduction of only one channel (206) in the upper block (20), see figures 8a to 8e to the respective channel (305) in the lower block (30), the logic of the washing flow with sanitizing liquid is presented in figures .9a and .9b, that is, similar to that developed for the first embodiment (see figures .7a/.7b), where the supply of this liquid passes through the single channel (206) reaching the respective channel (305), and is finally distributed homogeneously in the chamber (306), to finally also be distributed homogeneously throughout the external area of the body (401) of the piercing cannula (40).

Finally, in an example of a third alternative embodiment, it can be applied considering the introduction of multiple channels (206) in the upper block (20), see figures .10a, .10b and .10c and respective multiple channels (305) in the lower block (30), see figures .11a, .11b and .11c.

From what was described and illustrated it is verified that the "IMPROVEMENT APPLIED IN PERFORATOR OF AN IN OVO INJECTOR OF SUBSTANCES OF INTEREST, NOTABLY IN CONSTRUCTIVE ARRANGEMENT FOR SANITIZATION OF ALL THE INTERNAL AND EXTERNAL AREAS OF THE PIERCING CANNULA AND ITS OPERATIONAL SANITIZATION LOGIC", now claimed fits within the norms regulating the patent of invention in light of the Industrial Property Law, deserving from what was exhibited and as a consequence, the respective privilege.

## Claims

1. **"IMPROVEMENT APPLIED TO PERFORATOR OF IN OVO INJECTOR DEVICE OF SUBSTANCES OF INTEREST",** where a punch (I) is formed by an upper block (20) made of solid material, formed by a body (201) whose upper part has a funnel (202) defined, which extends to a channel (204) to which a lower block (30) made of solid material is mounted, formed by a body (301), provided with a channel (304) aligned with the channel (204) of the upper block (20), to which a piercing cannula (40) made of surgical or related steel is attached, formed by a body (401) whose lower end has a beveled tip (402) defined, whose improvement is **characterized by** the upper block (20) having channel(s) (206) defined, which must also pass through to the lower part of the body (201) and be aligned with the corresponding channel(s) (305) of the lower block (30), and the channels (304) and (305) extend to the chamber (306), which in turn has a lower channel (302) defined at the bottom thereof, where the improved perforator assembly (IA) is obtained from the assembly between the upper block (20) and the lower block (30) with alignment between the channels (204) and (206) with the corresponding channels (304) and (305) respectively, where the extreme upper part of the body (401) of the piercing cannula (40) is mounted, which passes through the channel (302) and chamber (306) of the lower block (30) until its coupling with the channel (204) of the upper block (20) with fitting stroke to the upper end of this channel (204) of the upper block (20) assembly, defining in the lower part of the lower block (30) a ring channel (500), which surrounds the entire outer part of the upper fitting end of the body (401) of the piercing cannula (40); and

2. **"SANITIZATION OPERATING LOGIC"** of the improved punch set (IA) of claim 1, wherein sanitization of the body (401) of the piercing cannula (40) is performed by feeding a sanitizer stream (Fx) that feeds the funnel (202) of the top block (20), **characterized by** describing two flow paths:
- Sanitization of the internal part of the piercing cannula (40), where the internal flow (Fxi) of sanitizer penetrates the internal part of the body (401) and describes a linear flow in which it sweeps the entire internal area thereof until it exits through the beveled tip (402); and
- Sanitization of the external part of the piercing cannula (40), where the external flow (Fxe) of sanitizer penetrates the channel(s) (206) of the upper block (20), and continues until it finds and travels through the corresponding channel(s) (305) of the lower block (30), leading to the chamber (306) and then draining through the annular channel (500), which surrounds the entire external part of the upper fitting end of the body (401) of the piercing cannula (40), which by gravity drains along the entire external surface of the body (401) until it meets the beveled tip (402) of the piercing cannula (40).
